# NEUE EUROPÄISCHE PATENTSCHRIFT

(11) **EP 0 680 866 B2**
(45) Veröffentlichungstag und Bekanntmachung des Hinweises auf die Entscheidung über den Einspruch: **20.09.2000**
(45) Hinweis auf die Patenterteilung: 16.07.1997
(21) Anmeldenummer: 95106121.7
(22) Anmeldetag: 24.04.1995
(51) Int. Cl.: B62D 25/16

(54) **Anordnung zur Reduktion eines Reifen/Fahrbahngeräusches**
Assembly for reducing tyre/road surface noise
Ensemble de réduction du bruit pneumatique chaussée

(30) Priorität: 06.05.1994 DE 4415983
(43) Veröffentlichungstag der Anmeldung: 08.11.1995
(73) Patentinhaber: Continental Aktiengesellschaft, 30165 Hannover (DE)
(72) Erfinder: Dodt, Thomas, Dr., D-30455 Hannover (DE); Gauterin, Frank, D-31535 Neustadt (DE); Schulze, Thomas, Dr., D-30173 Hannover (DE)
(74) Vertreter: Vinazzer, Edith, Dipl.-Ing.

(56) Entgegenhaltungen:
- EP-A- 0 222 193
- EP-A- 0 396 933
- EP-A- 0 509 166
- DE-A- 2 515 127
- DE-A- 3 343 402
- DE-A- 3 409 404
- DE-A- 3 428 906
- DE-A- 3 913 347
- DE-A- 4 011 705
- DE-B- 1 008 596
- DE-C- 4 241 518

## Beschreibung

Die vorliegende Erfindung betrifft eine am Radkasten eines Kraftfahrzeuges anzubringende, als passiver Schallabsorber wirkende Vorrichtung zur Reduktion des über die Luft übertragenen Anteiles des vom Kraftfahrzeug emittierten Reifen/Fahrbahngeräusches, wobei die Vorrichtung den Radkasten zumindest zum Teil überdeckt und eine zum Radkasten zu einem Innenraum umschließende Außenhülle sowie gegebenenfalls eine dem Radkasten zugeordnete Rückwand aufweist.

In den letzten Jahren wurde seitens der Kraftfahrzeughersteller schalldämmenden Maßnahmen, die vor allem die Motorgeräusche im Außengeräusch und deren Übertragung ins Fahrzeuginnere vermindern, verstärkt Aufmerksamkeit geschenkt. Zu diesen Maßnahmen zählt beispielsweise die Anbringung von schalldämmenden Motorkapselungen, was jedoch zur Folge hat, daß das Reifen/Fahrbahngeräusch mehr und mehr zur dominierenden Lärmquelle wird. Dabei entwickeln LKW-Reifen aus konstruktionsbedingten Gründen ein als störender empfundenes Rollgeräusch als PKW-Reifen. Die hauptsächliche Abstrahlung von Schalleistung erfolgt bei PKW-Reifen in einem Frequenzbereich von ca. 500 bis 2.000 Hz, bei LKW-Reifen in einem Frequenzbereich von ca. 400 bis 1.200 Hz.

Auch seitens der Reifenhersteller werden seit vielen Jahren Maßnahmen getroffen und ständig weiterentwickelt, die insbesondere darauf abzielen, das Reifen/Fahrbahngeräusch derart zu beeinflussen, daß eine Verteilung der auftretenden Frequenzen auf ein breiteres Frequenzband erfolgt, was subjektiv als angenehmer empfunden wird, als eine Schallabstrahlung mit vorherrschenden Frequenzen. Der Großteil der gesetzten Maßnahmen erfolgt am Laufstreifenprofil der Reifen selbst, indem grundsätzlich das Verfahren der Pitchlängenvariation, welches in Einzelaspekten immer wieder verbessert wird, angewandt wird.

Aus der DE 42 41 518 C1 ist eine am Rad eines Kraftfahrzeuges zu befestigende Umkleidung bekannt, die als ein doppelwandiges und formstabiles Flächengebilde ausgestaltet ist und ein System von Helmholtz-Resonatoren aufweist. Diese Vorrichtung wirkt als passiver Schallabsorber und umfaßt somit eine Außenhülle, die dem Rad zugewandt ist, und eine dem Radkasten zugewandte Rückwand. Dem Rad ist eine formstabile und somit starre Folie zugewandt, die der Gefahr der Verschmutzung bzw. der Anlagerung von Schmutz, einfrierendem Wasser und auch Schnee ausgesetzt ist. Dadurch kann die gesamte Vorrichtung ihre Wirksamkeit als Schallabsorber verlieren.

Der Erfindung liegt die Aufgabe zugrunde, eine als passiver Schallabsorber wirkende Vorrichtung gemäß der eingangs beschriebenen Art derart auszugestalten, daß die Gefahr des Verlustes der Wirksamkeit als Schallabsorber aufgrund von Verschmutzungen, einfrierendem Wasser und auch Schnee wesentlich verringert ist.

Die Aufgabe wird erfindungsgemäß dadurch gelöst, daß die Außenhülle als Lochabsorber ausgeführt ist und aus einem biegeweichen Material, beispielsweise aus Gummi oder einem Kunststoff, besteht.

Nach der Erfindung wird in unmittelbarer Nähe und in den Schallabstrahlungsrichtungen des abrollenden Reifens eine wirkungsvolle Maßnahme zur Schallabsorption getroffen, die auf die gewünschte Schallabsorption bezüglich der Frequenzbereiche und/oder der räumlichen Ausprägung der Schalleistung entsprechend abgestimmt werden kann. Die erfindungsgemäße Ausführung als Lochabsorber hat einerseits den Vorteil, daß die Löcher gegenüber einer Ausführung mit Helmholtz-Resonatoren vergleichsweise klein ausgeführt werden, so daß die Gefahr des Einbringens von Wasser oder Schmutz in den Innenraum der Vorrichtung wesentlich verringert ist. Dadurch, daß die Außenhülle aus einem biegeweichen Material besteht, ist sichergestellt, daß angelagerter Schmutz leicht abfallen kann und die Wirksamkeit der Vorrichtung als Schallabsorber erhalten bleibt.

In vorteilhafter Ausgestaltung der Erfindung ist der Innenraum zwischen Außenhülle und der Rückwand bzw. dem Radkasten mit Druckluft beaufschlagbar. Durch die Beaufschlagung mit Luftdruck wird die Einrichtung in ihrer Funktion als schallabsorbierendes Element aktiviert. Dabei kann durch die Größe des Überdruckes die Geometrie der Anordnung und damit das Absorptionsverhalten entsprechend beeinflußt werden. Durch den Überdruck im Inneren wird ferner für einen ständigen Luftstrom nach außen gesorgt, so daß ein Zusetzen der Löcher durch Schmutz oder durch das Eindringen von Wasser wirkungsvoll verhindert wird. Bei dieser Ausführungsform ist es dabei günstig, wenn im Innenraum der Vorrichtung eine Stützkonstruktion vorgesehen wird, um von vornherein eine gewisse Formung der Vorrichtung zu erzielen.

Um eine Schallabsorption in einem möglichst breitbandigen Frequenzbereich zu erreichen, ist es günstig, wenn die Löcher in der Außenhülle unterschiedliche Lochflächengrößen aufweisen und/oder unregelmäßig verteilt sind, wobei die Löcher bevorzugt mit einem kreisförmigen Querschnitt versehen werden.

Ist die Vorrichtung mit einer biegeweichen Außenhülle versehen, bei der eine Innenbeaufschlagung mit Druckluft vorgesehen ist, so ist es günstig, wenn der Durchmesser der Löcher kleiner gewählt wird als bei einer Vorrichtung, die mit einer starren Außenhülle versehen ist. Bei einer Vorrichtung mit biegeweicher Außenhülle beträgt dabei der Durchmesser der Löcher ≤ 3 mm, insbesondere zwischen 0,1 und 1 mm.

Die Schallabsorptionseigenschaften lassen sich ferner dadurch günstig beeinflussen, daß im Inneren der Vorrichtung insbesondere poröses schalldämmendes Material, beispielsweise Schaumstoff, Glaswolle, Steinwolle oder dergleichen, eingebracht ist. Dabei kann das schalldämmende Material als Schicht eingebracht sein oder auch das Innere der Vorrichtung komplett ausfüllen. Bei einer weiteren vorteilhaften Weiterentwicklung der Erfindung ist vorgesehen, daß die Außenhülle geometrisch strukturiert ist, insbesondere mit Noppen versehen ist, die vorzugsweise kegel-, pyramiden-, tetraeder-oder halbkugelförmig gestaltet sind. Auch diese Maßnahme macht eine weitere Abstimmung bzw. Beeinflussung der Schallabsorptionseigenschaften möglich.

Eine weitere günstige Beeinflussung der Schallabsorptionseigenschaften ist dadurch möglich, daß der Vorrichtung eine als Röhrenabsorber wirkende Einrichtung vorgeordnet ist. Dabei hat diese Maßnahme noch ferner den Vorteil, daß sie einen sehr guten Schutz vor Steinschlag, Schmutz und Spritzwasser darstellt.

Eine besonders einfache Ausgestaltung des Röhrenabsorbers besteht darin, daß sich dieser aus einer Vielzahl von dicht nebeneinander angeordneten Einzelröhren zusmmensetzt.

Bei einer weiteren Ausführungsform ist der Röhrenabsorber als massive Platte mit einer Vielzahl von eng beabstandeten Durchgangsbohrungen ausgeführt.

Eine weitere einfache Variante der Ausführung eines Röhrenabsorbers besteht darin, daß der Röhrenabsorber als Gitter ausgeführt ist, dessen Durchtrittsöffnungen insbesondere unterschiedlich groß sind.

Bei einer weiteren bevorzugten Ausführungsvariante ist der Röhrenabsorber als ein eine wabenförmige Struktur aufweisendes Gitter gestaltet. Die Anordnung des Röhrenabsorbers vor der Vorrichtung erfolgt bevorzugt in einem gewissen Abstand, der ≥ 1 cm, insbesondere zwischen 2 und 5 cm, beträgt.

Von Vorteil kann auch sein, wenn der Röhrenabsorber derart gestaltet wird, daß sich seine Dicke zumindest über einen Bereich seiner Erstreckung insbesondere stetig ändert

Der Röhrenabsorber kann sich ferner aus Röhren unterschiedlicher Länge zusammensetzen. Zusätzlich kann auch noch der Röhrenquerschnitt über die Röhrenlänge variiert werden, wobei eine stetige Änderung des Röhrenquerschnittes bevorzugt ist. Die Röhren können so zusätzlich als λ/4-Resonatoren für bestimmte Frequenzen wirken.

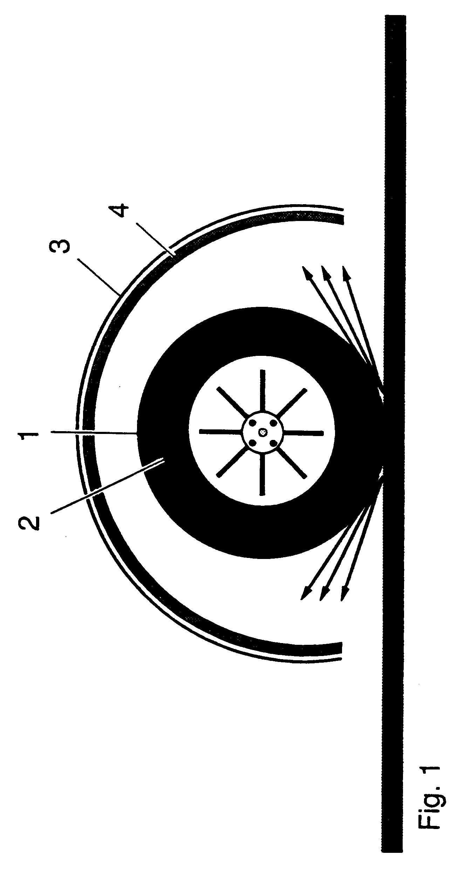

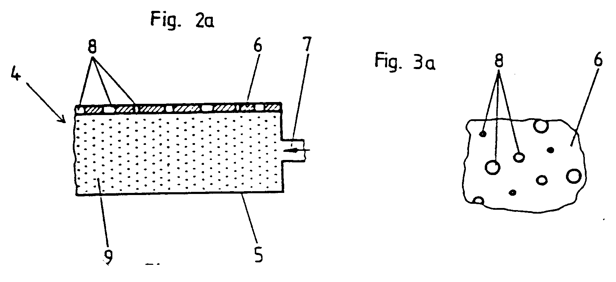

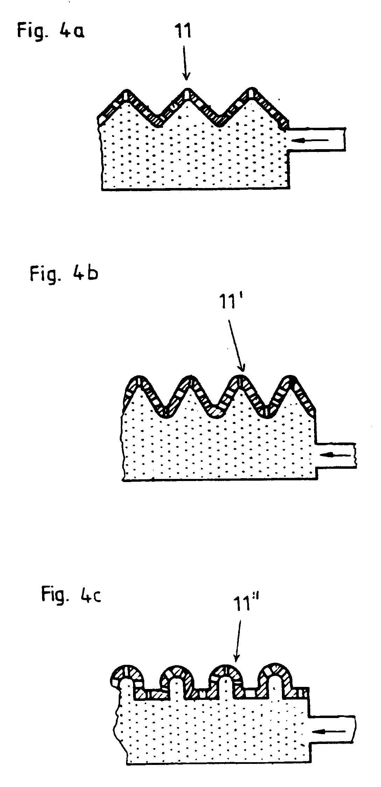

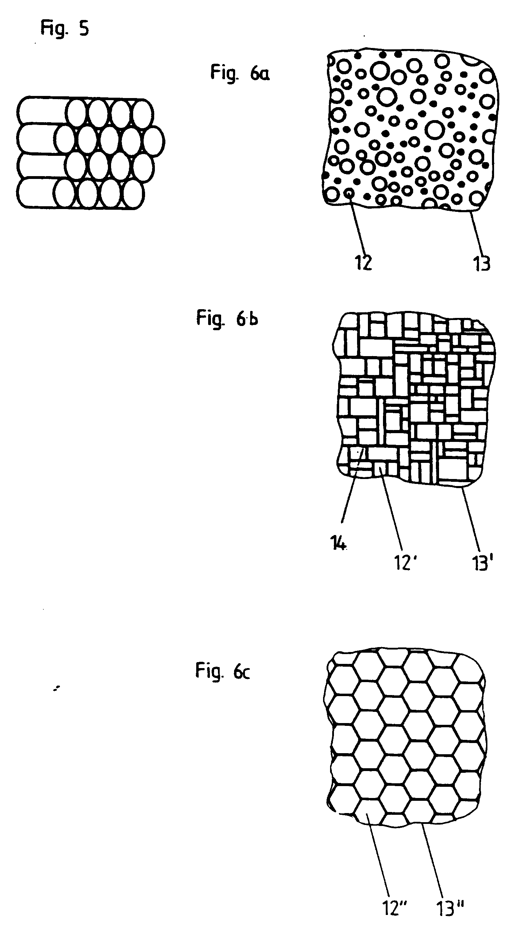

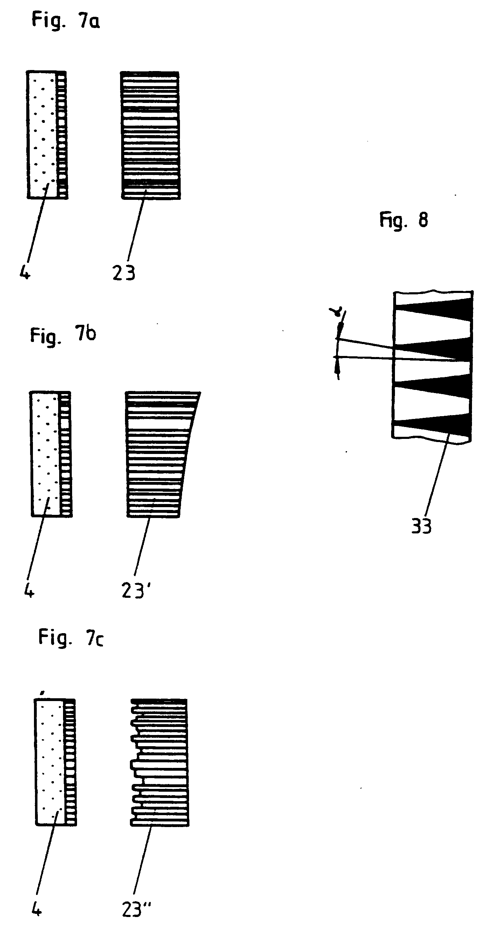

Weitere Merkmale, Vorteile und Einzelheiten der Erfindung werden nun anhand der Zeichnung, die einige Ausführungsbeispiele darstellt, näher beschrieben. Dabei zeigt Fig. 1 ein Rad mit darüber angeordnetem Radkasten in Seitensansicht in schematischer Darstellung, Fig. 2a, zeigt schematisch einen Querschnitt durch jeweils einen Teilbereich einer Ausführungsform der Erfindung, Fig. 3a eine Draufsicht auf einen Teilbereich der in Fig. 2a dargestellten Variante, Fig. 4a bis 4c schematische Querschnitte durch Teilbereiche weiterer Ausführungsformen, Fig. 5 schematisch eine Schrägansicht eines Teiles eines im Rahmen der Erfindung einsetzbaren Röhrenabsorbers, Fig. 6a bis 6c Draufsichten auf Teile weiterer Ausführungsformen eines Röhrenabsorbers, Fig. 7a bis 7c und Fig. 8 schematisch verschiedene weitere Ausgestaltungen von Röhrenabsorbern zum Teil unter Darstellung der grundsätzlichen Anordnung.

Fig. 1 zeigt ein Rad 1 mit einem Reifen 2 in Seitenansicht mit einem darüber angeordneten Radkasten 3. Die hauptsächlichen Abstrahlrichtungen des Reifen/Fahrbahngeräusches im Latscheinlauf und im Latschauslauf des Reifens 2 sind durch Pfeilbündel angedeutet. Gemäß der vorliegenden Erfindung ist der Radkasten 3 mit einer schallabsorbierenden Vorrichtung 4 versehen, die den Innenwandbereich des Radkastens 3 komplett abdeckt und am Radkasten 3 entsprechend befestigt ist.

Beim Ausführungsbeispiel gemäß Fig. 2a und Fig. 3a besteht die Vorrichtung 4 aus einer Rückwand 5, die dem Radkasten zugeordnet ist bzw. an diesem anliegt und dort befestigt wird und einer Außenhülle 6, wobei zwischen Rückwand 5 und Außenhülle 6 ein Hohlraum verbleibt. Die Außenhülle 6 besteht aus einem biegeweichen, jedoch gegenüber Umwelteinflüssen resistenten und möglichstschlagzähem Material, beispielsweise aus Gummi oder aus einem geeigneten Kunststoff. Die Rückwand 5 kann ebenfalls aus einem solchen Material oder auch einem starren Material, beispielsweise aus einem Kunststoff bestehen, welches in seiner Form dem Radkasten 3 entsprechend angepaßt ist. Alternativ dazu kann der Radkasten 3 selbst die Rückwand bilden. In diesem Fall wird die Außenhülle direkt am Radksten 3 befestigt, wobei diese Variante bei sämtlichen Ausführungsbeispielen realisiert werden kann. Bei sämtlichen Ausführungsbeispielen ist es ferner möglich, die Rand- bzw. Seitenbereiche der schallabsorbierenden Vorrichtung mit der Rückwand und/oder der Außenhülle mitzubilden oder gesonderte Seitenwandteile vorzusehen.

Die Außenhülle 6 ist mit einer Vielzahl von Löchern 8 versehen, so daß die Vorrichtung als Lochabsorber wirkt, die Außenhülle 6 selbst weist eine Dicke, die insbesondere zwischen 0,5 und 5 mm beträgt, auf. Die Dicke wird entsprechend der erwarteten Beanspruchung gewählt, wobei ferner über die Dicke die Resonanzfrequenz und die Impedanz des Lochabsorbers beeinflußbar ist. Wie Fig. 3a zeigt sind die Löcher 8 bevorzugt mit einem kreisförmigen Querschnitt versehen und weisen verschiedene Durchmesser auf. Bei einer Ausführung mit kreisförmigem Querschnitt wird der Durchmesser der Löcher 8 ≤ 3 mm, insbesondere 0,1 bis 1 mm, gewählt. Der Lochflächenanteil an der Gesamtfläche der Außenhülle 6 beträgt zwischen 5 und 80 %, insbesondere 20 bis 50 %. Die Verteilung der Löcher 8 kann auf regelmäßige oder unregelmäßige Art und Weise erfolgen, wobei diesbezüglich darauf geachtet wird, eine Anpassung an das zu erwartende Schallfeld, insbesondere was die Verteilung bzw. den Bereich der auftretenden Frequenzen betrifft, zu erzielen.

Der zwischen der Rückwand 5 und der Außenhülle 6 verbleibende Raum ist über eine Luftzufuhrleitung 7 mit Luftdruck beaufschlagbar. Dadurch wird zwischen der Rückwand 5 und der Außenhülle 6 ein Abstand von einigen Zentimetern eingestellt, der je nach Auslegung insbesondere 1 bis 10 cm beträgt. Die Vorrichtung 4 wird daher durch den Überdruck als absorbierendes Element aktiviert, wobei der Überdruck mittels einer nicht dargestellten Pumpe aufrecht erhalten wird. Zusätzlich erlaubt eine Variation der Größe des Luftdruckes eine weitere Beeinflussung der Schallabsorptionseigenschaften der Vorrichtung 4. Dabei hat der Überdruck günstigerweise noch die Wirkung, daß für einen ständigen Luftstrom über die Löcher 8 nach außen gesorgt wird, und somit einerseits ein Zusetzen der Löcher 8 durch Schmutz und andererseits das Eindringen von Wasser in das Vorrichtungsinnere verhindert wird. Bei Radkästen, die das Rad auch seitlich teilweise abdecken, hat eine Anordnung der Vorrichtung 4 an der Innenwand des seitlich abdeckenden Teiles ferner den Vorteil, daß durch den Luftstrom eine Kühlung des Reifens erzielt wird.

Im Innenraum der Vorrichtung 4 kann ferner zusätzlich ein poröses schalldämmendes Material 9, wie beispielsweise Schaumstoff, Glaswolle, Steinwolle oder dergleichen angeordnet werden. Dieses Material kann auch als schalldämmende Schicht auf der Rückwand 5 der Vorrichtung 4 oder direkt am Radkasten, falls keine gesonderte Rückwand vorgesehen ist, angebracht werden.

Zusätzlich kann zwischen der Rückwand 5 und der Außenhülle 6 eine Stützkonstruktion, die jedoch nicht dargestellt ist, vorgesehen werden, um von vornherein eine gewisse Formung der Vorrichtung 4 zu erzielen.

Zur weiteren Verbesserung der Schallabsorptionseigenschaften ist es weiters günstig, wenn die Außenhülle der Vorrichtung mit geeigneten geometrischen Strukturen mit einer Höhenerstreckung von einigen Zentimetern, insbesondere von 1 bis 10 cm, versehen wird. Die Fig. 4a, 4b und 4c zeigen mögliche Ausführungsformen derart gestalteter Außenhüllen. Da diese Ausführungsvarianten ansonsten Vorrichtungen zeigen, die jener gemäß Fig. 2a entspricht, wird in der nachfolgenden kurzen Beschreibung lediglich auf die gesonderte Ausgestaltung der Außenhüllen Bezug genommen. Fig. 4a zeigt dabei im Querschnitt eine Ausführungsform, bei der die Außenhülle derart ausgeführt ist, daß sie sich aus tetraeder- oder pyramidenförmigen Noppen 11 zusammensetzt. Bei der Ausführungsform nach Fig. 4b sind kegelförmig gestaltete Noppen 11' vorgesehen, in der Außenhülle gemäß Fig. 4c halbkugelförmige Noppen 11''.

Eine weitere Verbesserung der Schallabsorptionseigenschaften einer gemäß der vorliegenden Erfindung ausgeführten Vorrichtung läßt sich dadurch erzielen, daß vor der Vorrichtung, wie nun im folgenden und anhand der Zeichnungsfiguren 5 bis 7 beschrieben wird, eine als Röhrenabsorber wirkende Einrichtung angeordnet wird.

Grundsätzlich wirkt als Röhrenabsorber ein System von fest miteinander verbundenen Röhren, deren Durchmesser kleiner ist als ihre Länge. Fig. 5 zeigt eine solche grundsätzliche Struktur. Ein Röhrenabsorber bewirkt nur eine kleine Impedanzänderung der einfallenden Schallwelle, es tritt auch nur eine geringe Reflexion auf. Schallabsorbierend wirkt vor allem die Reibung der Schalldruckwelle an den Röhrenwänden.

Ein Röhrenabsorber kann nun, wie Fig. 5 zeigt, aus einer Vielzahl durch an ihren Seitenwänden verbundenen Einzelröhren bestehen. Fig. 6a zeigt einen im Rahmen der vorliegenden Erfindung einsetzbarer Röhrenabsorber 13, welcher als massive Platte mit einer Vielzahl von eng beabstandeten Durchgangsbohrungen 12 ausgeführt ist.

Fig. 6b zeigt eine Draufsicht auf einen Teilbereich eines Röhrenabsorbers 13', der als gitterartige Platte ausgeführt ist und aus einem System von rechteckförmigen Durchtrittsöffnungen 12' verschiedenster Querschnittsfläche mit zumindest zum Teil gemeinsamen Trennwänden 14 besteht.

Eine dritte Ausführungsvariante eines Röhrenabsorbers 13'' zeigt Fig. 6c, wo ein wabenförmig strukturiertes Gitter vorliegt, das sich somit aus im Querschnitt regelmäßige Sechsecke bildenden Strukturen 12'' zusammensetzt.

Hinsichtlich der Ausgestaltung des Röhrenabsorbers stehen dem Fachmann eine Vielzahl von Möglichkeiten offen, wobei in Fig. 6a, 6b und 6c lediglich und beispielhaft drei Ausführungsformen dargestellt sind.

Wie Fig. 7a, 7b und 7c schematisch zeigen erfolgt die Anordnung des Röhrenabsorbers bevorzugt in einem Abstand, der ≥ 1 cm, insbesondere zwischen 2 und 5 cm, gewählt wird vor der schallabsorbierenden Vorrichtung 4.

Fig. 7a zeigt dabei eine Variante, bei der die Röhrenlänge und somit die Dicke des Röhrenabsorbers 23 konstant gehalten ist. Wie Fig. 7b zeigt kann die Dicke des Röhrenabsorbers 23' und somit die Röhrenlänge über die Erstreckung des Röhrenabsorbers 23' stetig geändert werden, beispielsweise entsprechend der Rundung des Radkastens. Fig. 7c zeigt eine Ausführungsvariante, bei der die Röhren des Röhrenabsorbers 23'' unterschiedliche Längen aufweisen, wobei eine unregelmäßige Verteilung der Röhren gewählt ist.

Die tatsächlichen Längen der Röhren werden an den vorhandenen Einbauraum und die gewünschte Absorptionsfrequenz bzw. Absorptionsleistung angepaßt und kann zwischen 2 und 20 cm, bevorzugt zwischen 5 und 10 cm, betragen. Der Röhrenflächenanteil (Gesamtsumme der Röhrenquerschnittsflächen geteilt durch die Gesamtfrontfläche des Röhrenabsorbers) beträgt zweckmäßigerweise ≥ 50 %, insbesondere bis zu 95 %.

Zusätzlich kann auch der Röhrenquerschnitt über die Röhrenlänge variiert werden. Vorteilhafterweise kann eine stetige Änderung des Röhrenquerschnittes vorgenommen werden, wie es beispielsweise beim Röhrenabsorber 33 in Fig. 8 gezeigt ist. Die Röhren können so zusätzlich als λ/4-Resonatoren für verschiedene Frequenzen wirken. Dabei ist es günstig, wenn der die Querschnittsänderung bestimmende Winkel α (Fig. 8) ≤ 5° beträgt.

Neben den akustischen Vorteilen hat die Kombination der erfindungsgemäßen Vorrichtung mit Röhrenabsorbern noch weitere Vorteile. Bedingt durch ihre Konstruktion haben Röhrenabsorber eine hohe Steifigkeit und Festigkeit und bieten daher einen guten Schutz der erfindungsgemäßen Vorrichtung vor Steinschlag, Verschmutzung, Schnee oder Spritzwasser. Die Röhren der Röhrenabsorber wirken ferner bei nasser Fahrbahn der Sprühnebelbildung entgegen.

In Kombination mit einer erfindungsgemäßen Vorrichtung, wie sie in Fig. 2a dargestellt ist, also bei einem Lochabsorber, wo ein freier Luftdurchtritt gegeben ist, wirkt sich die Anordnung eines Röhrenabsorbers auch noch positiv auf die Belüftung und Luftkühlung der Bremsen und Reifen aus.

Schließlich wird noch darauf verwiesen, daß die beschriebenen und dargestellten Ausführungsvarianten auf unterschiedliche Art und Weise kombiniert werden können. Erwähnt wird ferner, daß nicht der gesamte Radkasten 3 mit einer Vorrichtung gemäß der vorliegenden Erfindung versehen werden muß. Die Vorrichtung kann lediglich dort vorgesehen werden, wo das Schallfeld am größten ist. Dabei ist es auch möglich, die Vorrichtung aus Einzelteilen zusammenzusetzen, die jeweils erfindungsgemäß ausgeführt sind.

## Patentansprüche

1. Am Radkasten eines Kraftfahrzeuges anzubringende, als passiver Schallabsorber wirkende Vorrichtung zur Reduktion des über die Luft übertragenen Anteiles des vom Kraftfahrzeug emittierten Reifen/Fahrbahngeräusches, wobei die Vorrichtung den Radkasten zumindest zum Teil überdeckt und eine zum Radkasten zu einen Innenraum umschließende Außenhülle sowie ggf. eine dem Radkasten (3) zugeordnete Rückwand aufweist, dadurch gekennzeichnet, daß die Außenhülle (6) als Lochabsorber ausgeführt ist und aus einem biegeweichen Material, beispielsweise aus Gummi oder einem Kunststoff, besteht.

2. Vorrichtung nach Anspruch 1, dadurch gekennzeichnet, daß der Innenraum zwischen der Außenhülle (6) und der Rückwand (5) bzw. dem Radkasten (3) mit Druckluft beaufschlagbar ist.

3. Vorrichtung nach Anspruch 1 oder 2, dadurch gekennzeichnet, daß im Innenraum eine Stützkonstruktion vorgesehen ist.

4. Vorrichtung nach einem der Ansprüche 1 bis 3, dadurch gekennzeichnet, daß die Löcher (8) in der als Lochabsorber ausgeführten Außenhülle (6) unterschiedliche Lochflächengrößen aufweisen und/oder unregelmäßig verteilt sind, wobei die Löcher (8) bevorzugt mit einem kreisförmigen Querschnitt versehen sind.

5. Vorrichtung nach Anspruch 4, dadurch gekennzeichnet, daß der Durchmesser der Löcher (8) in der Außenhülle (6) ≤ 3 mm, insbesondere zwischen 0,1 und 1 mm, beträgt.

6. Vorrichtung nach einem der Ansprüche 1 bis 5, dadurch gekennzeichnet, daß in ihrem Innenraum insbesondere poröses schalldämmendes Material (9), beispielsweise Schaumstoff, Glaswolle, Steinwolle oder dergleichen, eingebracht ist.

7. Vorrichtung nach Anspruch 6, dadurch gekennzeichnet, daß das schalldämmende Material als Schicht eingebracht ist oder auch den Innenraum komplett ausfüllt.

8. Vorrichtung nach einem der Ansprüche 1 bis 7, dadurch gekennzeichnet, daß die Außenhülle (6) geometrisch strukturiert ist und insbesondere mit Noppen (11, 11', 11'') versehen ist, die vorzugsweise kegel-, tetraeder-, pyramiden-oder halbkugelförmig gestaltet sind.

9. Vorrichtung nach einem der Ansprüche 1 bis 8, dadurch gekennzeichnet, daß ihr eine als Röhrenabsorber (13, 13', 13'', 23, 23', 23'', 33) wirkende Einrichtung vorgeordnet ist.

10. Vorrichtung nach Anspruch 9, dadurch gekennzeichnet, daß sich der Röhrenabsorber (20) aus einer Vielzahl miteinander verbundenen Einzelröhren zusammensetzt.

11. Vorrichtung nach Anspruch 9, dadurch gekennzeichnet, daß der Röhrenabsorber (13) als massive Platte mit einer Vielzahl von eng beabstandeten Durchgangsbohrungen (12) ausgeführt ist.

12. Vorrichtung nach Anspruch 9, dadurch gekennzeichnet, daß der Röhrenabsorber (13') als unterschiedlich große Durchtrittsöffnungen (12') aufweisendes Gitter ausgeführt ist.

13. Vorrichtung nach Anspruch 9, dadurch gekennzeichnet, daß der Röhrenabsorber (13'') als ein eine wabenförmige Struktur aufweisendes Gitter gestaltet ist.

14. Vorrichtung nach einem der Ansprüche 9 bis 13, dadurch gekennzeichnet, daß der Röhrenabsorber (13, 13', 13'', 23, 23', 23'', 33) in einem Abstand vor der Vorrichtung (4), der ≥ 1 cm, insbesondere zwischen 2 und 5 cm beträgt, angeordnet ist.

15. Vorrichtung nach einem der Ansprüche 9 bis 14, dadurch gekennzeichnet, daß sich die Dicke des Röhrenabsorbers (23') zumindest über einen Bereich seiner Erstreckung insbesondere stetig ändert.

16. Vorrichtung nach einem der Ansprüche 9 bis 15, dadurch gekennzeichnet, daß sich der Röhrenabsorber (23'') aus Röhren unterschiedlicher Länge zusammensetzt.

17. Vorrichtung nach einem der Ansprüche 9 bis 16, dadurch gekennzeichnet, daß der Röhrenquerschnitt über die Rohrlänge variiert wird, wobei die Querschnittsänderung insbesondere stetig erfolgt.

## Claims

1. Apparatus, which is to be mounted on the wheel housing of an automotive vehicle and acts as a passive sound absorber, for reducing the proportion, which is transmitted via the air, of the tyre/roadway noise emitted by the automotive vehicle, the apparatus covering the wheel housing at least partially and having an external sleeve, which surrounds an internal space extending to the wheel housing, and possibly a rear wall associated with the wheel housing (3), characterised in that the external sleeve (6) is configured as a perforated absorber and is formed from a flexible material, for example rubber or a plastics material.

2. Apparatus according to claim 1, characterised in that compressed air can act upon the internal space between the external sleeve (6) and the rear wall (5), or respectively the wheel housing (3).

3. Apparatus according to claim 1 or 2, characterised in that a support structure is provided in the internal space.

4. Apparatus according to one of claims 1 to 3, characterised in that the perforations (8) in the external sleeve (6), which is configured as a perforated absorber, have perforation areas of different sizes and/or are irregularly distributed, the perforations (8) being preferably provided with a circular cross-section.

5. Apparatus according to claim 4, characterised in that the diameter of the perforations (8) in the external sleeve (6) is ≤ 3 mm, more especially between 0.1 and 1 mm.

6. Apparatus according to one of claims 1 to 5, characterised in that more especially porous, sound-reducing material (9), for example expanded plastic foam, glass wool, rock wool or the like, is introduced in its internal space.

7. Apparatus according to claim 6, characterised in that the sound-reducing material is introduced as a layer or even completely fills the internal space.

8. Apparatus according to one of claims 1 to 7, characterised in that the external sleeve (6) has a geometrical structure and is more especially provided with knubs (11, 11', 11''), which preferably have conical, tetrahedral, pyramid-shaped or hemispherical configurations.

9. Apparatus according to one of claims 1 to 8, characterised in that an arrangement, which acts as a tube-type absorber (13, 13', 13'', 23, 23', 23'', 33), is disposed in front of said apparatus.

10. Apparatus according to claim 9, characterised in that the tube-type absorber (23) comprises a plurality of interconnected individual tubes.

11. Apparatus according to claim 9, characterised in that the tube-type absorber (13) is configured as a solid plate having a plurality of closely spaced through-bores (12).

12. Apparatus according to claim 9, characterised in that the tube-type absorber (13') is configured as a lattice having through-apertures (12') of different sizes.

13. Apparatus according to claim 9, characterised in that the tube-type absorber (13'') is configured as a lattice having a honeycomb structure.

14. Apparatus according to one of claims 9 to 13, characterised in that the tube-type absorber (13, 13', 13'', 23, 23', 23'', 33) is disposed at a spacing in front of the apparatus (4), which spacing is ≥ 1 cm, more especially between 2 and 5 cm.

15. Apparatus according to one of claims 9 to 14, characterised in that the thickness of the tube-type absorber (23') changes more especially constantly at least over a region of its extension.

16. Apparatus according to one of claims 9 to 15, characterised in that the tube-type absorber (23'') comprises tubes of different lengths.

17. Apparatus according to one of claims 9 to 16, characterised in that the tubular cross-section is varied over the tube length, the change in cross-section being more especially constant.

## Revendications

1. Dispositif agissant en absorbeur acoustique passif, se montant sur l'aile d'un véhicule automobile pour réduire la fraction du bruit bandage/chaussée émis par le véhicule qui est transmise par l'air, le dispositif recouvrant au moins partiellement l'aile et comprenant une couverture extérieure par rapport à l'aile et formant un enveloppement d'un volume intérieur, ainsi qu'éventuellement une paroi arrière associée à l'aile (3), caractérisé en ce que la couverture extérieure (6) est conformée en absorbeur à trous et se compose d'une matière souple, par exemple de caoutchouc ou d'une matière plastique.

2. Dispositif selon la revendication 1, caractérisé en ce que le volume interne compris entre la couverture extérieure (6) et la paroi arrière (5) ou l'aile (3) est alimenté en air comprimé.

3. Dispositif selon la revendication 1 ou 2, caractérisé en ce qu'une construction de soutien est prévue dans le volume interne.

4. Dispositif selon l'une des revendications 1 à 3, caractérisé en ce que les trous (8) que comporte la couverture extérieure (6) réalisée en absorbeur à trous ont des surfaces de dimensions différentes et/ou sont distribués irrégulièrement, les trous (8) ayant de préférence une section circulaire.

5. Dispositif selon la revendication 4, caractérisé en ce que diamètre des trous (8) de la couverture extérieure (6) est ≤ 3 mm, en particulier compris entre 0,1 et 1 mm.

6. Dispositif selon l'une des revendications 1 à 5, caractérisé en ce qu'une matière d'insonorisation (9) en particulier poreuse, par exemple une matière alvéolaire, de la laine de verre, de la laine minérale ou analogue, est placée dans son volume interne.

7. Dispositif selon la revendication 6, caractérisé en ce que la matière d'insonorisation est placée sous forme d'une couche ou emplit aussi complètement le volume interne.

8. Dispositif selon l'une des revendications 1 à 7, caractérisé en ce que la couverture extérieure (6) est structurée géométriquement et comporte en particulier des boutons (11, 11', 11'') qui sont de préférence en forme de cônes, tétraèdres, pyramides ou hémisphères.

9. Dispositif selon l'une des revendications 1 à 8, caractérisé en ce qu'un dispositif agissant en absorbeur tubulaire (13, 13', 13'', 23, 23', 23'', 33) est disposé devant lui.

10. Dispositif selon la revendication 9, caractérisé en ce que l'absorbeur tubulaire (20) se compose de multiples tubes individuels assujettis les uns aux autres.

11. Dispositif selon la revendication 9, caractérisé en ce que l'absorbeur tubulaire (13) est conformé en plaque massive comportant de multiples trous de traversée (12) étroitement rapprochés.

12. Dispositif selon la revendication 9, caractérisé en ce que l'absorbeur tubulaire (13') est réalisé sous la forme d'une grille présentant des trous de traversée (12') ayant des dimensions différentes.

13. Dispositif selon la revendication 9, caractérisé en ce que l'absorbeur tubulaire (13'') est conformé en grille présentant une structure en nid d'abeilles.

14. Dispositif selon l'une des revendications 9 à 13, caractérisé en ce que l'absorbeur tubulaire (13, 13', 13'', 23, 23', 23'', 33) est disposé à une distance au-devant du dispositif (4) qui est ≤ 1 cm, en particulier qui est comprise entre 2 et 5 cm.

15. Dispositif selon l'une des revendications 9 à 14, caractérisé en ce que l'épaisseur de l'absorbeur tubulaire (23') varie en particulier en continu au moins dans une partie de son étendue.

16. Dispositif selon l'une des revendications 9 à 15, caractérisé en ce que l'absorbeur tubulaire (23'') se compose de tubes ayant des longueurs différentes.

17. Dispositif selon l'une des revendications 9 à 16, caractérisé en ce que la section des tubes varie sur la longueur des tubes, la variation de section étant en particulier continue.
